# EUROPEAN PATENT APPLICATION

(11) **EP 1 418 372 A1**
(43) Date of publication of application: **12.05.2004**
(21) Application number: 02079669.4
(22) Date of filing: 08.11.2002
(51) Int. Cl.: F16K 17/38

(54) **Thermally activated relief valve**

(71) Applicant: Luxembourg Patent Company S.A., 7440 Lintgen (LU)
(72) Inventor: Kerger, Loll, 5613 Mondorf-les-Bains (LU)
(74) Representative: Weydert, Robert

(57) **Abstract**

The relief valve (10) comprises a piston (18) disposed in a valve housing (12) and normally retained in a closed position in the housing (12) by a fusible soldered connection (21) between the piston (18) and the housing (12). The fusible connection (21) is arranged so that it is loaded in shear by high pressure fluid forces acting on the piston (18) and tending to move it to an open position. When the valve (10) is exposed to an abnormally high temperature the fusible connection (21) melts and the high pressure fluid forces the piston (18) to the open position to release the high pressure fluid. In another embodiment the piston is adhesively bonded by an epoxide resin material to the housing.

## Description

The present invention relates to a thermally activated relief valve, especially for a compressed or liquefied gas cylinder, or for use with a gas tap adapted to be mounted on a gas cylinder.

Such thermally activated relief valves are known in the prior art and are usually provided with a piston movable in a housing body and retained by a plug of fusible material, such as an eutectic metal alloy, in a closed position. If the relief valve is exposed to an abnormally high temperature exceeding a predetermined value, for example in case of fire, the fusible material melts and is forced out of a housing body under the effect of the gas cylinder pressure acting on the piston to urge the valve piston to an open position, in which it places the interior of the gas cylinder into communication with an outlet opening to release the gas pressure from within the gas cylinder to the surrounding environment. In the prior art valve the plug of fusible material is loaded in compression by the gas pressure in the gas cylinder acting on the relief valve piston. The fusible material loaded in compression has the tendency to flow with time under the effect of this compressive pressure and may be forced out the housing body which may result in an undesired movement of the relief valve piston to its open position permitting undesired discharge of gas from within the gas cylinder even if the relief valve is not exposed to said abnormally high temperature. To prevent this, several attempts have been made in the prior art to avoid the fusible material loaded in compression to be forced out of the housing body during normal operating conditions when the temperature of the environment is below the predetermined temperature. So, for example, in the US patents 4,800,948, 4,744,382 and 4,744,383 intricate flow passages have been proposed to prevent extrusion of the plug of fusible material. In the German laid-open publication DE 196 00 312 a member of porous material is arranged between the plug of fusible material and a housing body outlet to prevent extrusion of the fusible material during normal operation when it is in its solid state but which permits the melted fusible material to pass therethrough under the effect of the compressive load applied to the melted material. Another type of a thermally activated relief valve is disclosed in EP patent application 0 766 028, which also uses a porous member to prevent extrusion of the fusible material during normal operation. This porous member permits passage of the melted fusible material therethrough due to the relief valve having been exposed to a temperature exceeding the predetermined temperature. Another attempt to prevent extrusion of the fusible material is disclosed in US patent 6,367,500 in which there is provided a differential piston having opposing piston faces of different areas exposed to the gas pressure in the gas cylinder to thereby reduce the compressive load exerted on the plug of fusible material.

Notwithstanding the above prior art solutions, there is a need for an improved solution of the problem referred to, namely preventing extrusion of the fusible material and undesired opening of the relief valve during normal operating conditions.

More particularly, the object of the invention is to provide a simple thermally activated relief valve which prevents undesired opening of the relief valve during normal operating conditions.

This is achieved in accordance with the invention by the provision of a thermally activated fluid pressure relief valve, especially for a compressed or liquefied gas cylinder, or a gas tap for such a cylinder, having a piston means, said piston means having a longitudinal axis and being normally retained in a closed position in tight engagement with a sealing surface, and being axially movable into an open position to release said fluid pressure when the relief valve is exposed to an abnormally high temperature, and a fusible material retaining said piston means in the closed position against the fluid pressure force applied thereto when the relief valve is exposed to a temperature that is below said abnormally high temperature, said fusible material melting when said relief valve is exposed to said abnormally high temperature whereby said piston means is movable to said open position by the effect of the fluid pressure force applied thereto, characterized in that said fusible material is bonded to said piston means and to means housing at least a portion of said piston means therein to form a fusible interconnection therebetween that normally retains said piston means in said closed position, and that said fusible interconnection is arranged so that said fusible material is placed predominantly under shear load by the fluid pressure force exerted on the piston means.

It has been found that the fusible material has a better resistance to shear loads than to compressive loads and therefore the invention teaches to arrange the fusible material such that it is predominantly loaded by shear forces in response to the high pressure fluid acting on the relief valve piston. The relief valve constructed in accordance with the teaching of the invention is less complex than the above described state of the art relief valves since the intricate flow passages or the porous member are no longer necessary. Also a differential piston is not necessary but may nevertheless be provided, if desired.

Preferably, the fusible interconnection is disposed circumferentially about a portion of the piston means between axially extending, radially inwardly and radially outwardly oriented surfaces of the housing means and the piston means portion, respectively.

In one preferred embodiment means are provided to prevent the piston means from being expelled out of the housing means after melting of the fusible material and under the effect of the fluid pressure load acting on the piston means. This means for preventing the piston means from being expelled out of the housing may be formed by a radially outwardly extending flange on the piston means cooperating with an abutment surface formed on a piston retaining member of the housing means, which retaining member has an axial bore therethrough surrounding a portion of the piston means and with the fusible interconnection being provided between this portion of the piston means and the piston retaining member of the housing means. Alternatively, the means to prevent the piston means from being expelled out of the housing means may comprise a retaining rod member projecting axially from an end of the piston means exposed to the fluid pressure, which retaining rod member extends through an opening of an inner housing flange and has a head portion provided with a larger outer diameter than the diameter of the opening in the housing flange, with the head portion being located on a side of the housing flange facing axially away from the piston means and the housing flange having at least one orifice therethrough placing opposite sides of the housing flange in fluid communication with one another.

The piston means may be provided with seal means fluid tightly engaging an internal bore of the housing means between a fluid inlet opening provided at one axial end of the housing means and outlet opening means provided intermediate the opposite axial ends of the housing means.

The fusible material is preferably an eutectic metal alloy soldered both to the piston means and the housing means. Although a thin layer of fusible material is sufficient, the fusible material may be formed of a radially thicker material sleeve that is soldered at its inner and outer surfaces to the piston means and the housing means, respectively.

In another embodiment the fusible material may be an epoxide resin material adhesively bonded to the piston means and the housing means.

The invention will now be described in greater detail with reference to the accompanying drawings, wherein:
Figure 1 shows a first embodiment of the thermally activated relief valve, according to the invention, in the closed position,
Figure 2 shows the thermally activated relief valve of figure 1 in an open position,
Figure 3 shows another piston retaining means, and
Figure 4 shows another embodiment of the thermally activated relief valve in its closed position, having a differential piston.

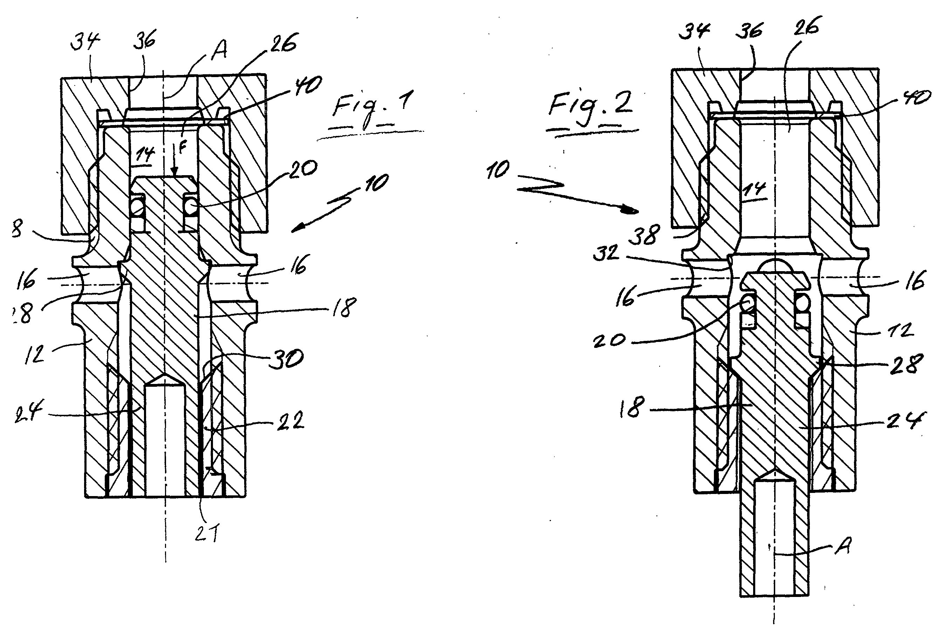

The thermally activated relief valve 10 of figures 1 and 2 comprises a housing body 12 having a longitudinal axis A and an axially extending through bore 14 extending through the housing body 12 from one axial end thereof to the other axial end. At one axial end of the housing body 12 there is provided an inlet opening 26 communicating with the bore 14. Intermediate the axial ends of the housing body 12 there are provided a plurality of circumferentially spaced outlet openings 16 communicating with the bore 14.

A piston 18 having a longitudinal axis coincident with the housing body axis A is mounted in the housing body 12 and carries at one axial end, the upper end in figures 1 and 2, a sealing ring 20 that is in the closed position of the relief valve, shown in figure 1, in gas tight engagement with a sealing surface of the through bore 14 of the housing body 12 between the inlet opening 26 and the outlet openings 16.

A piston retaining member or sleeve 22 is threaded into the other axial end of the housing body 12, namely into the lower end of the housing body 12 in figures 1 and 2 and surrounds a stem portion 24 of the piston between the other end of the housing body 12, namely the lower end thereof in figures 1 and 2, and the outlet openings 16. The sleeve 22 forms part of the housing body 12 and has preferably a cylindrical axially extending and inwardly facing inner surface surrounding a cylindrical, axially extending and outwardly facing outer surface of the piston stem portion 24. It is understood that these surfaces need not to be cylindrical, but polygonal or other non-circularly shaped surfaces may also be provided. The inner surface of the sleeve 22 is soldered by a fusible material 21 to the outer surface of the piston stem portion 18, which fusible material 21 consists of an eutectic metal alloy known in the art having a melting point such that it fuses when exposed to an abnormally high temperature exceeding a predetermined temperature value. A suitable eutectic material can be obtained from ALPHA-FRY TECHNOLOGIES, in Naarden, The Netherlands.

Due to the soldered interconnection of the piston 18 and the sleeve 22, the piston 18 is normally retained in its closed position, shown in figure 1, as long as the fusible material 21 is in its solid state. In this condition the sealing ring 20 carried by the piston 18 is in tight engagement with the through bore 14 between the upper or gas inlet opening 26 of the housing body and the outlet openings 16. The gas pressure from within the gas cylinder (not shown) is in flow communication with the inlet opening 26 and applies an axial force in the direction of the arrow F on the piston 18, which axial force places the fusible material under shear load 21. The fusible interconnection 21 is capable to transmit high shear forces to safely retain the piston 18 in its closed position under the application of large gas pressure forces thereto.

When the relief valve is exposed to a high temperature environment the fusible material 21 changes to liquid state whereby the piston 18 is released from the sleeve 22 and under the effect of the gas pressure force applied to the piston 18 the piston 18 is urged into its open position, shown in figure 2, in which an annular shoulder 28 formed on the piston intermediate the ends thereof engages an upwardly facing end surface 30 of the sleeve 22 to prevent the piston 18 from being expelled out of the housing body 12 under the effect of the high gas cylinder pressure acting on the piston. The outer diameter of the annular piston shoulder 28 is larger than the inner diameter of the sleeve end surface 30. It is noted that the upper end surface of the shoulder 28 engages a housing seat 32 in the closed position of the relief valve shown in figure 1.

A housing cap member 34 having an axial gas flow passage 36 therethrough communicating with the housing body inlet 26 is threadably engaged with an outer threaded portion 38 the housing body 12 between the outlet openings 16 and the upper end of the housing body 12. A sealing washer 40 is disposed between the housing body 12 and the cap member 34. However, the cap member 34 is not essential and the housing body 12 may be threadably fixed directly to the gas cylinder (not shown) or to a gas cylinder tap (not shown).

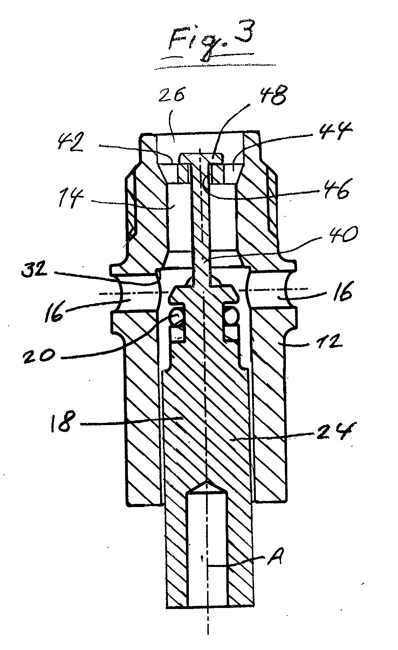

In figure 3 another means to prevent the piston 18 from being expelled out of the housing body 12 is disclosed. In all other respects the embodiment of figure 3 is identical to the embodiment of figures 1 and 2. The retaining sleeve 22 of the embodiment of figures 1 and 2 is eliminated and replaced by a retaining rod 40 extending from the end of the piston 18 facing the inlet opening 26. The retaining rod 40 extends through a retaining flange 42 of the housing body 12. The flange 42 is adjacent inlet opening 26 in the bore 24, extends inwardly from the wall of the bore 14, and has a plurality of orifices 44 extending therethrough to place opposite sides of the flange 42 in gas communication with one another. The retaining rod 40 extends through a central opening 46 in the flange 42 and has a head portion 48 of larger outer diameter than the diameter of the opening 46. Accordingly, after melting of the fusible interconnection between the piston 18 and the housing body 12 the piston 18 is urged by the gas forces applied thereto to its open position but is prevented from being expelled out of the housing 12 by engagement of the enlarged head portion 48 of the retaining rod 40 with the flange 42 of the housing 12.

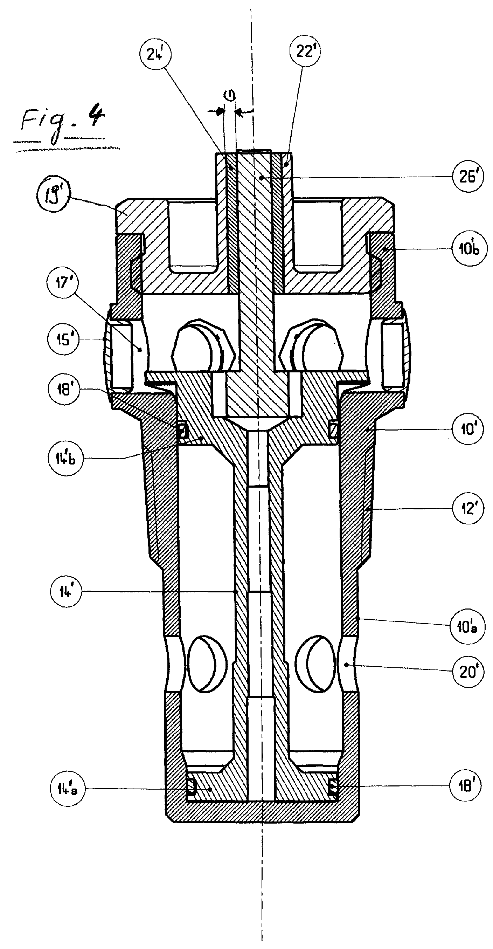

Another embodiment of the invention is shown in figure 4, wherein the piston is a differential piston, of the type as disclosed in US patent 6,367,500. In this embodiment the housing body 10' has a lower portion 10'a and an upper portion 10'b as well as external threaded portion 12'. The piston 14' is a differential piston having a lower flange 14'a and an upper flange 14'b of different diameters engaging different internal diameter portions of the lower housing portion 10'a. The lower housing portion 10'a has circumferentially spaced inlet openings 20' to permit the high pressure gas to enter the housing body 10' between the flanges 14'a and 14'b and to exert a net upwardly directed force on the piston 14' due to the surface area of the upper flange member 14'b exposed to the gas pressure being larger than the surface area exposed to the gas pressure of the lower flange member 14'a. The flange members 14'a and 14'b have sealing rings 18', 18' in the outer circumferential surfaces thereof to gas tightly engage the associated internal surfaces of the lower housing portion 10'a.

The upper housing portion 10'b has a circumferential array of outlet openings 17' normally closed by caps 15'. An annular closure member 19' is threaded into the upper housing portion 10'b and has a central axially extending sleeve member 22' in which there is received an axially extending stem member 26' of the piston member 14'. Preferably the sleeve member 22' and the stem member 26' have cylindrical axially extending, inwardly facing and outwardly facing surfaces, respectively, which are radially spaced from one another leaving a radial cap G therebetween. A sleeve 24 of fusible material 24 having a predetermined radial thickness slightly less than the radial thickness of the cap G is disposed between the radially inwardly and radially outwardly facing cylindrical surfaces of the sleeve member 22' and the stem member 26', respectively, and is soldered at its outer and inner cylindrical surfaces to the sleeve 22' and the piston stem 22', respectively to normally retain the piston 14' in the closed position shown in figure 3, in which the sealing rings 18', 18' are tightly engaged with the respective surfaces on the inner side of the housing lower portion 10'a. When the relief valve is exposed to an abnormally high temperature exceeding a predetermined temperature, the fusible material of the sleeve 24 melts and under the effect of the net axial force exerted by the gas pressure in an upward direction on the piston 14', the piston member 14' is urged upwardly until the flange 14b' seats on the closure member 19'. In this position the gas inlet openings 20' are in fluid communication with the gas outlet openings 17' and the caps 15' are ejected under the effect of the high gas pressure to permit release of the high pressure gas from the gas cylinder.

As with the embodiment of figures 1 and 2, the resultant axial force exerted in the closed position of the piston 14' on the piston stem member 26' is transmitted through the fusible material sleeve 24' to the closure member 19' securely fixed to the housing body 12' and the fusible material sleeve 24' safely transmits this axial force predominantly by shear loading thereof to prevent movement of the piston member 14' to the open position as long the relief valve is not exposed to a temperature exceeding the predetermined temperature. Those skilled in the art will understand that the differential piston 14' reduces the shear loading of the fusible material applied thereto by the gas pressure acting on the piston 14'.

In both embodiments, in the open position of the piston 18; 14' a portion thereof is exposed exteriorly of the housing body 12; 10' to provide a visual indication of failure of the soldered fusible material interconnection.

While different embodiments of the relief valve have been disclosed, the invention is not limited to these embodiments and changes or modifications may be made thereto by the skilled person without leaving the scope of the appended claims. For example, other means may be provided to prevent expelling of the piston from the housing body, such as axially extending housing projections having piston retaining ledges at the free ends thereof. Further, the piston may be disposed directly in the housing of gas tap or other device in which the relief valve is to be used. In other words, the relief valve must not have its own housing attached to the housing of the gas tap or other device, but the piston may be fixed by the fusible interconnection directly to the housing of the gas tap or other device with which it is to be used. Additionally, the piston may tightly engage a sealing surface in the body at the gas tap or other device in which the relief valve is used and the fusible interconnecting may be between the piston and a means fitted about at least a portion of the piston or housing at least a portion of the piston therein and secured for example by a threaded connection to the gas tap body.

Although the preferred embodiments have been described with reference to a gas pressure relief valve for a compressed or liquefied gas cylinder, it is to be understood that other applications are possible to release other compressed gaseous fluids or liquids in case of overtemperature caused dangerous pressure.

Although some preferred embodiments have been described it is obvious to one skilled in the art that various modifications or changes may be made by the skilled person without leaving the scope of the appendant claims.

## Claims

1. A thermally activated fluid pressure relief valve, especially for a compressed or liquefied gas cylinder, or a gas tap for such a cylinder, having a piston means, said piston means having a longitudinal axis and being normally retained in a closed position in fluid tight engagement with a sealing surface, and being axially movable into an open position to release said fluid pressure when the relief valve is exposed to an abnormally high temperature, and a fusible material retaining said piston means in the closed position against the fluid pressure force applied thereto when the relief valve is exposed to a temperature that is below said abnormally high temperature, said fusible material melting when said relief valve is exposed to said abnormally high temperature whereby said piston means is movable to said open position by the effect of the fluid pressure force applied thereto, **characterized in that** said fusible material is bonded to said piston means and to means housing at least a portion of said piston means therein to form a fusible interconnection therebetween that normally retains said piston means in said closed position, and that said fusible interconnection is arranged so that said fusible material is placed predominantly under shear load by the fluid pressure force exerted on the piston means.

2. The relief valve of claim 1, **characterized in that** said fusible interconnection is disposed circumferentially about a portion of said piston means between axially extending, radially inwardly and radially outwardly oriented surfaces of said housing means and said piston means portion, respectively.

3. The relief valve of claim 1 or 2 including means to prevent the piston means from being expelled out of said housing means after melting of said fusible material under the effect of said fluid pressure load acting on said piston means.

4. The relief valve of anyone of claims 1 to 3, **characterized in that** in the open position of the piston means an end portion thereof is exposed exteriorly of the housing means to provide a visual indication of failure of said fusible connection.

5. Relief valve according of any one of claims 1 to 4, **characterized in that** the piston means is movable in an axially extending bore of the housing means, said housing means having at least one fluid inlet opening and at least one fluid outlet opening communicating with said bore, said piston means carrying a sealing means that gas tightly engages the bore of said housing means between the at least one inlet opening and at least one outlet opening in said closed position of said piston means.

6. Relief valve according to any one of claims 1 to 5, **characterized in that** the piston means is a differential piston means having opposing piston faces of different area exposed to the fluid pressure.

7. Relief valve according to any one of claims 1 to 6, **characterized in that** said fusible material comprises a sleeve of fusible material having a predetermined radial thickness and being bonded both to said piston means and said housing means at its inner and outer surfaces, respectively.

8. Relief valve according to anyone of claims 1 to 7, **characterized in that** said fusible material is a metallic material soldered to both said piston means and said housing means.

9. Relief valve according to anyone of claims 1 to 7, **characterized in that** said fusible material is an epoxide resin material adhesively bonded to said piston means and said housing means.

10. Relief valve according to claim 3, **characterized in that** the means to prevent the piston means from being expelled out of said housing means comprises a radially outwardly extending flange on said piston means cooperating with an abutment surface formed on a piston retaining member of said housing means, said piston retaining member having an axial bore therethrough surrounding a portion of the piston means, and that the fusible interconnection is between said piston means portion and said piston retaining member of said housing means.

11. Relief valve according to claim 10, **characterized in that** the piston retaining member of said housing means is distinct from the remaining portion of the housing means but securely fixed thereto.

12. Relief valve according to claim 3, **characterized in that** the means to prevent the piston means from being expelled out of said housing means comprises a retaining rod member projecting axially from an end of the piston means exposed to said fluid pressure, said rod member extending through an opening of a flange of said housing means and having a head portion having a larger outer diameter than the diameter of said opening in said flange, said head portion being located on a side of said flange facing axially away from the piston means, and said flange having at least one orifice therethrough placing opposite sides of said flange in fluid communication with one another.
